# EUROPEAN PATENT SPECIFICATION

(11) **EP 3 694 249 B1**
(45) Date of publication and mention of the grant of the patent: **23.02.2022**
(21) Application number: 17930086.8
(22) Date of filing: 24.10.2017
(51) Int. Cl.: H04W 28/06, H04W 28/02

(54) **METHOD FOR TRANSMITTING DATA, TERMINAL DEVICE AND NETWORK DEVICE**
VERFAHREN ZUR ÜBERTRAGUNG VON DATEN, ENDGERÄTEVORRICHTUNG UND NETZWERKVORRICHTUNG
PROCÉDÉ DE TRANSMISSION DE DONNÉES, DISPOSITIF DE TERMINAL, ET DISPOSITIF DE RÉSEAU

(43) Date of publication of application: 12.08.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Penza, Giancarlo
(86) International application number: PCT/CN2017/107509
(87) International publication number: WO 2019/079973

(56) References cited:
- CN-A- 102 291 771
- CN-A- 102 291 772
- CN-A- 102 984 659
- US-A1- 2012 314 672
- HUAWEI ET AL: "Design of BSR format and BS table", 3GPP DRAFT; R2-1710202 BSR FORMAT AND BS TABLE DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20171009 - 20171013 8 October 2017 (2017-10-08), XP051342254, Retrieved from the Internet: URL:http://www.3gpp.org/ftp/Meetings_3GPP_ SYNC/RAN2/Docs/ [retrieved on 2017-10-08]
- INTEL CORPORATION: "BSR enhancements", 3GPP DRAFT; R2-1710606 BSR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20171009 - 20171013 8 October 2017 (2017-10-08), XP051342642, Retrieved from the Internet: URL:http://www.3gpp.org/ftp/Meetings_3GPP_ SYNC/RAN2/Docs/ [retrieved on 2017-10-08]

## Description

### Technical field of the invention

The present invention generally relates to the field of communication.

More in particular, the present invention concerns a method for transmitting data, a terminal device and a network device.

### Background

A terminal device reports a Buffer Status Report (BSR) to a network device in order to let the network device know a buffer status of data to be transmitted by the terminal device, so that the network device may authorize uplink resources to the terminal device more accurately. Reporting of a BSR is controlled by a parameter coordinated with a Radio Resource Control (RRC) signaling. For example, a buffer status report period timer (periodicBSR-Timer), a buffer status report retransmission timer (retxBSR-Timer).

In addition, due to different services, a terminal device may establish a large amount of radio bearers (each bearer corresponds to a logical channel). If one BSR is reported for each logical channel, it will bring a large amount of signaling overhead. In order to avoid this situation, a concept of a Logical Channel Group (LCG) is introduced, and each logical channel is placed into one LCG. A terminal device reports a BSR based on a LCG instead of reporting one BSR for each logical channel. For example, in a Long Term Evolution (LTE) technology, the number of LCGs is 4, while in a New Air Interface (NR) technology, the number of LCGs is 8.

In LTE, when only one LCG has data to be transmitted, a terminal device adopts a short BSR format to report its buffer status. However, since a long BSR format in NR is in a form of a bitmap, when a terminal device has only one LCG with data to be transmitted, the terminal device may adopt a short BSR to report its buffer status, with only one LCG. However, in related art, no method for a terminal device to determine a reporting format of its BSR when only one LCG has data to be transmitted is related.

Therefore, in view of the situation that a terminal device has only one LCG with data to be transmitted, a method for determining a reporting format of its BSR is urgently needed to be provided in the field.

By way of further background the following publications are referred to: CN 102 291 771 A (2011-12-21), ZTE CORP [CN], disclosing a solution for determining, by a UE, a BSR format based on an indication received from the network device.

### Summary of the invention

The invention is set out in the appended set of claims. A method for transmitting data, a terminal device and a network device are provided, which can improve a transmission efficiency of data. Further improvements and embodiments are provided in the dependent claims. It should be noted that embodiments of the invention are those whose scope is within that of the appended claims, and the implementations disclosed in this disclosure which do not fall under the scope of the appended claims are to be considered as examples for illustration.

### Brief Description of Drawings

FIG. 1 is an example of an application scenario of the present invention.
FIG. 2 is a schematic flowchart of a method for transmitting data according to an embodiment of the present invention.
FIG. 3 is a schematic diagram of a first format of an embodiment of the present invention.
FIG. 4 is another schematic diagram of the first format according to an embodiment of the present invention.
FIG. 5 is a schematic diagram of a second format according to an embodiment of the present invention.
FIG. 6 is another schematic diagram of the second format according to an embodiment of the present invention.
FIG. 7 is a schematic block diagram of a terminal device according to an embodiment of the present invention.
FIG. 8 is a schematic block diagram of another terminal device according to an embodiment of the present invention.
FIG. 9 is a schematic block diagram of a network device according to an embodiment of the present invention.
FIG. 10 is a schematic diagram of another network device according to an embodiment of the present invention.

### Detailed description of the invention

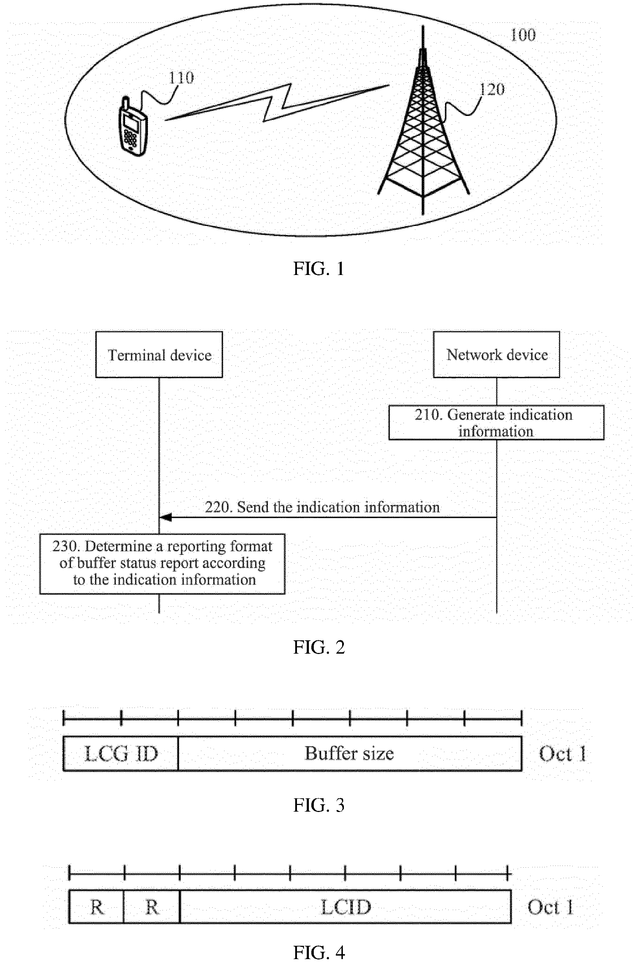

FIG. 1 is a schematic diagram of an application scenario according to an embodiment of the present invention.

As shown in FIG. 1, a communication system 100 may include a terminal device 110 and a network device 120. The network device 120 may communicate with the terminal device 110 via an air interface. Multi-service transmission is supported between the terminal device 110 and the network device 120.

It should be understood that the communication system 100 is only an example for describing an embodiment of the present invention. However, embodiments of the present invention are not limited to this. For example, technical solutions of the embodiments of the present invention may be applied to various communication systems, including but not limited to: a Global System of Mobile Communication (GSM), a Code Division Multiple Access (CDMA) system, a Wideband Code Division Multiple Access (WCDMA) system, a General Packet Radio Service (GPRS) system, a Long Term Evolution (LTE) system, a LTE Time Division Duplex (TDD) system, a Universal Mobile Telecommunication System (UMTS).

The present invention describes various embodiments in combination with a network device and a terminal device.

The network device 120 may refer to any entity on a network side for sending or receiving signals, for example, the network device may be a user equipment of Machine Type Communication (MTC), a Base Transceiver Station (BTS) in GSM or CDMA, a NodeB in WCDMA, an Evolution Node B (eNB or NodeB) in LTE, a base station device in a 5G network.

The terminal device 110 may be any terminal device. Specifically, the terminal device 110 may communicate with one or more core networks through a radio access network (RAN), and may also be referred to as an access terminal, a User Equipment (UE), a subscriber unit, a subscriber station, a mobile station, a mobile platform, a remote station, a remote terminal, a mobile device, a user terminal, a terminal, a wireless communication device, a user agent, or a user apparatus. For example, the terminal device may be a cellular phone, a cordless phone, a Session Initiation Protocol (SIP) phone, a Wireless Local Loop (WLL) station, a Personal Digital Assistant (PDA), a handheld device with a wireless communication function, a computing device, or another processing device connected to a wireless modem, an on-board device, a wearable device, a terminal device in a 5G network.

FIG. 2 is a schematic flowchart of a method for transmitting data according to an embodiment of the present invention.

As shown in FIG. 2, the method includes acts 210-230.

In act 210, a network device generates indication information.

In act 220, the network device sends the indication information to a terminal device.

In act 230, the terminal device determines a reporting format of a buffer status report (BSR) according to the indication information.

Specifically, when the terminal device has only one LCG with data to be transmitted, the reporting format of the BSR of the one LCG is determined, the reporting format is a first format or a second format, and the first format is different from the second format; and the terminal device reports the BSR of the one LCG according to the reporting format of the BSR of the one LCG.

It should be noted that the method for transmitting data according to an embodiment of the present invention is applicable to a scenario where a terminal device has only one LCG with data to be transmitted. But it is not limited to this scenario.

For example, when a terminal device has multiple LCGs and the multiple LCGs have data to be transmitted, the terminal device may directly determine reporting formats of the multiple LCGs as the first format or the second format.

It should be understood that the terms first format and second format in an embodiment of the present invention are only used for distinguishing reporting formats of BSRs from each other. Embodiments of the present invention are not limited to specific forms thereof.

In one embodiment, the number of BSRs that can be carried in the first format is different from that can be carried in the second format. Further, the first format is a format for reporting only the BSR of the one LCG, and the second format is a format for reporting a BSR including at least the BSR of the one LCG.

In order to facilitate the understanding of the solution, the following description will take the first format as a short BSR and the second format as a long BSR as an example.

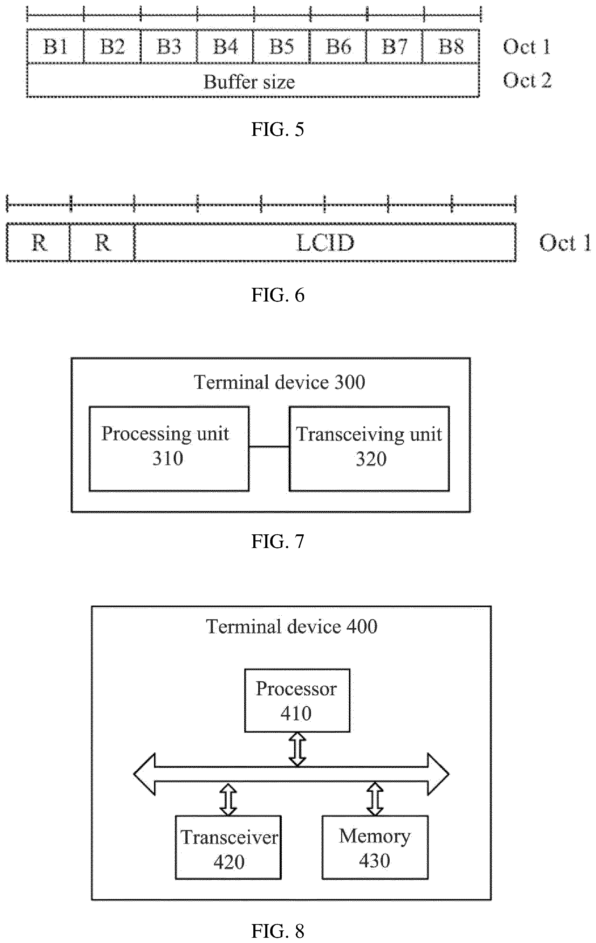

FIGs. 3 and 4 schematically show a first format in an embodiment of the present invention, and FIGs. 5 and 6 schematically show a second format in an embodiment of the present invention.

For example, as shown in FIG. 3, the first format may include a Logical Channel Group Identification (LCG ID) field and a corresponding Buffer Size field. It may be seen that the first format may only report a BSR of one LCG. The LCG ID field specifies a LCG corresponding to a reported buffer status, and a Buffer Size specifies a sum of available data remaining in a Radio Link Control (RLC) layer and a Packet Data Convergence Protocol (PDCP) layer corresponding to all logical channels of the LCG for transmission after all Media Access Control (MAC) Protocol Data Units (PDU) of the terminal device in a transmission time interval (TTI) for sending this BSR are generated,. In addition, Oct 1 shown in FIG. 3 is a bit unit, for example, 8 bits as shown in FIG. 3.

For another example, as shown in FIG. 4, the first format may include two reserved (R) fields and one Logical Channel Group Identification (LCG ID) field. In other words, a size of data to be transmitted for all logical channels corresponding to a LCG is indicated by two R fields.

For another example, as shown in FIG. 5, the second format may include a bitmap field and a Buffer Size field, wherein, the bitmap field indicates a reporting status of BSRs of all LGGs possessed by a terminal device, specifically B1 to B8 as shown in FIG. 5. For example, assuming a value of the bitmap field is 10000000, it may be understood that a reporting buffer status of the terminal device corresponds to only one LCG.

For another example, as shown in FIG. 6, the second format may include two reserved (R) fields and a Logical Channel Group Identification (LCG ID) field. In other words, a size of data to be transmitted for all logical channels corresponding to a LCG is indicated by two R fields. It should be understood that a difference between the first format shown in FIG. 4 and the second format shown in FIG. 6 may be that the reserved field of the first format shown in FIG. 4 may include information other than a LCG ID, while the R field shown in FIG. 6 may include a LCG ID. However, embodiments of the present invention are not limited thereto.

It should be understood that the first format and the second format of an embodiment of the present invention are not limited to the example descriptions of FIGs. 3 to 6. For example, as shown in FIG. 3, the LCG ID field has a field length of 3 bits, and for example, the Buffer Size field has a field length of 5 bits. However, embodiments of the present invention are not limited thereto. For example, the LCG ID field has a field length of 2 bits, and for example, the Buffer Size field has a field length of 6 bits.

According to the technical solution of an embodiment of the invention, when only one Logical Channel Group (LCG) has data to be transmitted, the terminal device can firstly determine a reporting format of a BSR of the one LCG, and then report the BSR of the one LCG according to the reporting format of the BSR of the one LCG, thereby improving a reporting efficiency of the BSR.

The following will describe an implementation that the terminal device determines the reporting format of the BSR of the one LCG when there is only one LCG has data to be transmitted in an embodiment of the present invention.

In one embodiment, the terminal device determines the BSR of the one LCG according to a data amount of the one LCG and/or a service type corresponding to the one LCG. Only the example defining that the determination is based on a service type is part of the claimed invention.

For example, when the data amount of the data to be transmitted of the one LCG is less than a threshold value, the terminal device may select a short BSR, if the amount of data to be transmitted of this one LCG is greater than the threshold value, the terminal device may select a long BSR.

For example, if the service type corresponding to this one LCG is a first service type, the terminal device may select a short BSR regardless of the data amount of the data to be transmitted of the one LCG; if the service type corresponding to this one LCG is other than the first service type, the terminal device may select a long BSR.

For another example, if the service type corresponding to this one LCG is the first service type, and the data amount of the data to be transmitted for this one LCG is less than a threshold value, the terminal device may select a short BSR, otherwise, the terminal device may select a long BSR.

Further, the first service type or the threshold value may be configured in advance, or may be statically or semi-statically or dynamically configured by a network device. Further, the first service type may be a type of voice service or an audio service or another service. Particular details are not limited by embodiments of the present invention.

The threshold value and the first service type of the terminal device are preconfigured by the network device will be described as an example below. Optionally, the terminal device may receive a RRC signaling sent by the network device, and the RRC signaling includes the indication information. That is, the network device may configure the threshold value and the first service type through the RRC signaling.

Specifically, in one embodiment, before the terminal device determines the reporting format of the BSR of the one LCG, the terminal device may receive indication information sent by the network device, the indication information is configured for indicating that the terminal device reports the BSR of the one LCG according to the first format when only the one LCG of the terminal device has data to be transmitted, or the indication information is configured for indicating that the terminal device reports the BSR of the one LCG according to the second format when only the one LCG of the terminal device has data to be transmitted. Therefore, the terminal device may determine the reporting format of the BSR of the one LCG according to the indication information.

For example, the indication information includes a threshold value for indicating that when a data amount of the data to be transmitted of the one LCG is less than or equal to the threshold value, the terminal device reports the BSR of the one LCG according to the first format, and when the data amount of the data to be transmitted of the one LCG is greater than the threshold value, the terminal device reports the BSR of the one LCG according to the second format.

For another example, the indication information includes a first service type, which is configured for indicating that the terminal device reports the BSR of the one LCG according to the first format when a service type corresponding to the one LCG is the first service type, and the terminal device reports the BSR of the one LCG according to the second format when the service type corresponding to the one LCG is not the first service type.

It should be understood that the above-mentioned reporting format for the network device to indicate the terminal device to determine the buffer status report is only a schematic illustration of an embodiment of the present invention, and embodiments of the present invention are not limited thereto.

FIG. 7 is a schematic block diagram of a terminal device according to an embodiment of the present invention.

As shown in FIG. 7, the terminal device 300 includes a processing unit 310 and a transceiver unit 320.

The processing unit 310 is configured to determine a reporting format of the buffer status report (BSR) of one LCG when the terminal device has only one Logical Channel Group (LCG) with data to be transmitted, the reporting format is a first format or a second format, the first format is different from the second format; and the transceiver unit 320 is configured to report the BSR of the one LCG according to the reporting format of the BSR of the one LCG.

The processing unit 310 is specifically configured to: determine the BSR of the one LGG according to a data amount of the one LCG and/or a service type corresponding to the one LCG. Only the example defining that the determination is based on a service type is part of the claimed invention.

Optionally, the transceiver unit 320 is further configured to: receive indication information sent by the network device before the processing unit 310 determines the reporting format of the buffer status report BSR of the one LCG, the indication information is configured for indicating that the terminal device reports the BSR of the one LCG according to the first format when the terminal device has only the one LCG with data to be transmitted, or the indication information is configured for indicating that the terminal device reports the BSR of the one LCG according to the second format when the terminal device has only the one LCG with data to be transmitted; wherein, the processing unit 310 is specifically configured to: determine the reporting format of the BSR of the one LGG according to the indication information.

Optionally, the indication information includes a threshold value for indicating that the terminal device reports the BSR of the one LCG according to the first format when a data amount of the data to be transmitted of the one LCG is less than or equal to the threshold value, and the terminal device reports the BSR of the one LCG according to the second format when the data amount of the data to be transmitted of the one LCG is greater than the threshold value. This example is not part of the claimed invention

The indication information includes a first service type, which is configured for indicating that the terminal device reports the BSR of the one LCG according to the first format when a service type corresponding to the one LCG is the first service type, and the terminal device reports the BSR of the one LCG according to the second format when the service type corresponding to the one LCG is not the first service type.

Optionally, the number of BSRs that can be carried in the first format is different from that can be carried in the second format.

Optionally, the first format is a format for reporting only the BSR of the one LCG, and the second format is a format for reporting a BSR including at least the BSR of the one LCG.

Optionally, the transceiver unit 320 is specifically configured to: receive a Radio Resource Control (RRC) signaling sent by the network device, wherein the RRC signaling includes the indication information.

It should be noted that the processing unit 310 may be implemented by a processor, and the transceiving unit 320 may be implemented by a transceiver. As shown in FIG. 8, a terminal device 400 may include a processor 410, a transceiver 420, and a memory 430. The memory 430 may be configured for storing indication information, or may be configured for storing codes, instructions, etc., executed by the processor 410. The various components in the terminal device 400 are connected by a bus system. The bus system includes a power bus, a control bus and a status signal bus in addition to a data bus.

The terminal device 400 shown in FIG. 8 may implement the various processes implemented by the terminal device in the method embodiment of FIG. 2 described above. In order to avoid duplication, the details will not be repeated here.

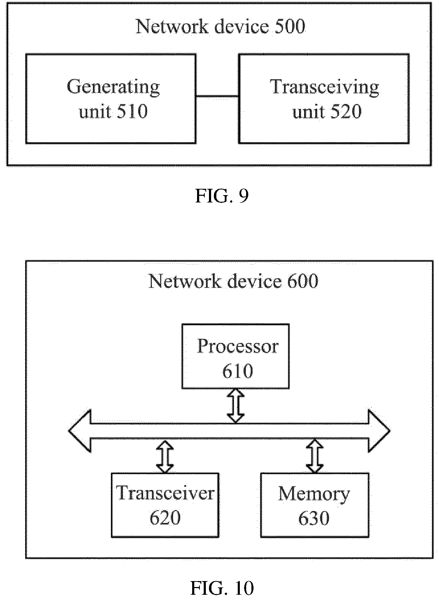

FIG. 9 is a schematic block diagram of a network device according to an embodiment of the present invention.

As shown in FIG. 9, the network device 500 includes a generating unit 510 and a transceiving unit 520.

The generating unit 510 is configured to generate indication information for a terminal device to determine a reporting format of a buffer status report (BSR) of one Logical Channel Group (LCG) when the terminal device has only one LCG with data to be transmitted, the reporting format is a first format or a second format, the first format is different from the second format; and the transceiving unit 520, configured to send the indication information to the terminal device.

Optionally, the indication information is configured for indicating that the terminal device reports the BSR of the one LCG according to the first format when the terminal device has only the one LCG with data to be transmitted, or the indication information is configured for indicating that the terminal device reports the BSR of the one LCG according to the second format when the terminal device has only the one LCG with data to be transmitted.

Optionally, the indication information includes a threshold value for indicating that the terminal device reports the BSR of the one LCG according to the first format when a data amount of the data to be transmitted of the one LCG is less than or equal to the threshold value, and the terminal device reports the BSR of the one LCG according to the second format when the data amount of the data to be transmitted of the one LCG is greater than the threshold value.

The indication information includes a first service type, which is configured for indicating that the terminal device reports the BSR of the one LCG according to the first format when a service type corresponding to the one LCG is the first service type, and the terminal device reports the BSR of the one LCG according to the second format when the service type corresponding to the LCG is not the first service type.

Optionally, the number of BSRs that can be carried in the first format is different from that can be carried in the second format.

Optionally, the first format is a format for reporting only the BSR of the one LCG, and the second format is a format for reporting a BSR including at least the BSR of the one LCG.

Optionally, the transceiver unit 520 is specifically configured to: send a Radio Resource Control (RRC) signaling to the terminal device, and the RRC signaling includes the indication information.

It should be noted that the generating unit 510 may be implemented by a processor, and the transceiving unit 520 may be implemented by a transceiver. As shown in FIG. 10, a network device 600 may include a processor 610, a transceiver 620, and a memory 630. The memory 630 may be configured for storing indication information, or may be configured for storing codes, instructions, etc., executed by the processor 610. The various components in the network device 600 are connected by a bus system. The bus system includes a power bus, a control bus and a status signal bus in addition to a data bus.

The network device 600 shown in FIG. 10 may implement the various processes implemented by the network device in the method embodiment of FIG. 2 described above. In order to avoid duplication, the details will not be repeated here. It should be noted that the method embodiments in embodiments of the present invention may be applied to a processor or implemented by the processor.

In the implementation process, each act of the method embodiments in the embodiments of the present invention may be completed by an integrated logic circuit of hardware in the processor or an instruction in the form of software. More specifically, the acts of the method disclosed in connection with the embodiments of the present invention may be directly embodied as completion through the execution of a hardware decoding processor or completion through the execution in the combination of hardware and software modules in the decoding processor. Software modules may be located in a typical storage medium in the art, such as, a random access memory (RAM), a flash memory, a read-only memory, a programmable read-only memory, an electrical erasable programmable memory, or a register. The storage medium is located in the memory, and the processor reads information in the memory and completes the actions of the above method in combination with its hardware.

Herein, the processor may be an integrated circuit chip with a capability for processing signals, and may implement various methods, acts and logic block diagrams disclosed in the embodiments of the present invention. For example, the above processor may be a general purpose processor, a digital signal processor (DSP), an application specific integrated circuit (ASIC), a field programmable gate array (FPGA) or another programmable logic device, a transistor logic device, or a discrete hardware component, or the like. Furthermore, the general purpose processor may be a microprocessor or the processor may be any conventional processor or the like.

In addition, the memory in embodiments of the present invention may be a transitory memory or non-transitory memory, or may include both the transitory memory and the non-transitory memory. The non-transitory memory may be a read-only memory (ROM), a programmable ROM (PROM), an erasable PROM (EPROM), an electrically erasable EPROM (EEPROM), or a flash memory. The transitory memory may be a Random Access Memory (RAM) which serves as an external cache. It should be understood that, the foregoing memory is an example for illustration and should not be construed as limiting. For example, optionally, the memory in the embodiments of the present invention may be a Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), Direct Rambus RAM (DR RAM), or the like. That is, memories in the systems and methods described herein are intended to include, but are not limited to, these and any other suitable types of memories.

Finally, it should be noted that the terms used in the embodiments of the present invention and the appended claims are for the purpose of describing specific embodiments only and are not intended to limit the embodiments of the present invention.

For example, the singular forms "a", "said", and "the" used in the embodiments of the present invention and the appended claims are also intended to include the plural forms unless the context clearly indicates other meanings.

For another example, depending on the context, the word "when" as used herein may be interpreted as "if' or "whether" or "while" or "in response to a determination of/that" or "in response to a detection of/that". Similarly, depending on the context, the phrase "if determined" or "if detected (a stated condition or event)" may be interpreted as "when ... is determined" or "in response to a determination" or "when (stated condition or event) is detected" or "in response to a detection of (stated condition or event)".

Those of ordinary skill in the art will recognize that the example elements and algorithm acts described in combination with the embodiments disclosed herein may be implemented in electronic hardware, or a combination of computer software and electronic hardware. Whether these functions are implemented in hardware or software depends on the specific application and design constraints of the technical solution. One skilled in the art may use different methods to implement the described functions for each particular application, but such implementation should not be considered to be beyond the scope of embodiments of the present invention.

Those skilled in the art may clearly understand that for convenience and conciseness of description, the specific working processes of the systems, apparatuses and units described above may refer to the corresponding processes in the method embodiments and will not be described here.

In several embodiments provided by the present application, it should be understood that the disclosed systems, apparatuses and methods may be implemented in other ways. For example, the apparatus embodiments described above are only illustrative, for example, the division of the units is only a logical function division, and there may be other division modes in actual implementation, for example, multiple units or components may be combined or integrated into another system, or some features may be ignored or not executed. On the other hand, the mutual coupling or direct coupling or communication connection shown or discussed may be indirect coupling or communication connection through some interface, apparatus or unit, and may be in electrical, mechanical or other forms.

The unit described as a separate component may or may not be physically separated, and the component shown as a unit may or may not be a physical unit, i.e., it may be located in one place or may be distributed over multiple network units. Parts or all of the units may be selected according to actual needs to achieve the purpose of the embodiments of the present invention.

In addition, various functional units in the embodiments of the present invention may be integrated in one processing unit, or various units may be presented separately in a physical way, or two or more units may be integrated in one unit.

The function units may be stored in a computer readable storage medium if realized in a form of software functional units and sold or used as a separate product. Based on this understanding, the technical solutions of the embodiments of the present invention, in essence, or the part contributing to the related art, or the part of the technical solutions, may be embodied in the form of a software product stored in a storage medium, including several instructions for causing a computer device (which may be a personal computer, a server, or a network device, etc.) to perform all or parts of the acts of the methods described in various embodiments of the present invention. The aforementioned storage medium includes a medium capable of storing program codes, such as, a U disk, a mobile hard disk, a read-only memory (ROM), a magnetic disk or an optical disk, etc.

## Claims

1. A method for transmitting data, comprising:
determining, by a terminal device, a reporting format of a buffer status report, BSR, of one Logical Channel Group, LCG, when the terminal device has only the one LCG with data to be transmitted, wherein the reporting format is a first format or a second format, the first format being different from the second format; and
reporting, by the terminal device, the BSR of the one LCG according to the determined reporting format of the BSR of the one LCG;
wherein before determining the reporting format of the BSR of the one LCG, the method further comprises:
receiving, by the terminal device, indication information sent by a network device, wherein the indication information is indicative that the terminal device reports the BSR of the one LCG according to the first format when the terminal device has only the one LCG with data to be transmitted, or the indication information is indicative that the terminal device reports the BSR of the one LCG according to the second format when the terminal device has only the one LCG with data to be transmitted;
wherein the method is **characterized in that** determining the reporting format of the BSR of the one LCG comprises:
determining, by the terminal device, the reporting format of the BSR of the one LCG according to the indication information; wherein
the indication information comprises a first service type, and the first service type is indicative that the terminal device reports the BSR of the one LCG according to the first format when a service type corresponding to the one LCG is the first service type, and the terminal device reports the BSR of the one LCG according to the second format when the service type corresponding to the one LCG is not the first service type.

2. The method of claim 1, wherein determining the reporting format of the BSR of the one LCG comprises:
determining, by the terminal device, the BSR of the one LCG according to a data amount of the one LCG or a service type corresponding to the one LCG.

3. The method of any one of claims 1 to 2, wherein the number of BSRs carried in the first format is different from the number of BSRs carried in the second format.

4. The method of claim 3, wherein the first format is a format for reporting only the BSR of the one LCG, and the second format is a format for reporting a BSR comprising at least the BSR of the one LCG.

5. The method of any one of claims 1 to 4, wherein receiving, by the terminal device, the indication information sent by the network device comprises:
receiving, by the terminal device, a Radio Resource Control, RRC, signaling sent by the network device, wherein the RRC signaling comprises the indication information.

6. A terminal device (300), comprising:
a processing unit (310) configured to determine a reporting format of a buffer status report, BSR, of one Logical Channel Group, LCG, when the terminal device (300) has only the one LCG with data to be transmitted, wherein the reporting format is a first format or a second format, and wherein the first format and the second format are different; and
a transceiving unit (320) configured to report the BSR of the one LCG according to the determined reporting format of the BSR of the one LCG;
wherein, the transceiving unit (320) is further configured to:
receive indication information sent by the network device before the processing unit (310) determines the reporting format of the BSR of the one LCG, wherein the indication information is indicative that the terminal device (300) reports the BSR of the one LCG according to the first format when the terminal device (300) has only the one LCG with data to be transmitted, or the indication information is indicative that the terminal device (300) reports the BSR of the one LCG according to the second format when the terminal device (300) has only the one LCG of data to be transmitted;
wherein the terminal device is **characterized in that** the processing unit (310) is configured to:
determine the reporting format of the BSR of the one LGG according to the indication information; wherein the indication information comprises a first service type, and the first service type is indicative that the terminal device (300) reports the BSR of the one LCG according to the first format when a service type corresponding to the one LCG is the first service type, and the terminal device (300) reports the BSR of the one LCG according to the second format when the service type corresponding to the one LCG is not the first service type.

7. The terminal device of claim 6, wherein the processing unit (310) is configured to:
determine the BSR of the one LCG according to a data amount of the one LCG or a service type corresponding to the one LCG.

8. The terminal device of any one of claims 6 to 7, wherein the number of BSRs that can be carried in the first format is different from the number of BSRs that can be carried in the second format.

9. The terminal device of claim 6, wherein the first format is a format for reporting only the BSR of the one LCG, and the second format is a format for reporting a BSR comprising at least the BSR of the one LCG.

10. The terminal device of any one of claims 6 to 9, wherein the transceiving unit (320) is configured to:
receive a Radio Resource Control -RRC- signaling sent by the network device, wherein the RRC signaling comprises the indication information.

11. A network device (500) comprising:
a generating unit (510) configured to generate indication information, wherein the indication information is indicative for a terminal device to determine a reporting format of a buffer status report, BSR, of one Logical Channel Group, LCG, when the terminal device has only the one LCG with data to be transmitted, the reporting format being a first format or a second format, wherein the first format and the second format are different; and
a transceiving unit (520) configured to send the generated indication information to the terminal device,wherein
the indication information is configured for indicating that the terminal device reports the BSR of one LCG according to the first format when the terminal device has only the one LCG with data to be transmitted, or the indication information is configured for indicating that the terminal device reports the BSR of the one LCG according to the second format when the terminal device has only the one LCG with data to be transmitted; and wherein the network device is **characterized in that** the generated
indication information comprises a first service type, and the first service type is configured for indicating that the terminal device reports the BSR of the one LCG according to the first format when a service type corresponding to the one LCG is the first service type, and the terminal device reports the BSR of the one LCG according to the second format when the service type corresponding to the one LCG is not the first service type.

## Patentansprüche

1. Verfahren zum Übertragen von Daten, das Folgendes umfasst:
Bestimmen eines Berichtsformats eines Pufferstatusberichts, BSR, einer logischen Kanalgruppe, LCG, durch eine Endgerätevorrichtung, wenn die Endgerätevorrichtung nur die eine LCG mit zu übertragenden Daten aufweist, wobei das Berichtsformat ein erstes Format oder ein zweites Format ist, wobei sich das erste Format vom zweiten Format unterscheidet; und
Melden des BSR der einen LCG durch die Endgerätevorrichtung gemäß dem bestimmten Berichtsformat des BSR der einen LCG;
wobei das Verfahren vor dem Bestimmen des Berichtsformats des BSR der einen LCG Folgendes umfasst:
Empfangen von Anzeigeinformationen, die von einer Netzwerkvorrichtung gesendet werden, durch die Endgerätevorrichtung, wobei die Anzeigeinformationen anzeigen, dass die Endgerätevorrichtung den BSR der einen LCG gemäß dem ersten Format meldet, wenn die Endgerätevorrichtung nur die eine LCG mit zu übertragenden Daten aufweist, oder die Anzeigeinformationen anzeigen, dass die Endgerätevorrichtung den BSR der einen LCG gemäß dem zweiten Format meldet, wenn die Endgerätevorrichtung nur die eine LCG mit zu übertragenden Daten aufweist;
wobei das Verfahren **dadurch gekennzeichnet ist, dass** das Bestimmen des Berichtsformats des BSR der einen LCG Folgendes umfasst:
Bestimmen des Berichtsformats des BSR der einen LCG durch die Endgerätevorrichtung gemäß den Anzeigeinformationen;
wobei
die Anzeigeinformationen einen ersten Diensttyp umfassen und der erste Diensttyp anzeigt, dass die Endgerätevorrichtung den BSR der einen LCG gemäß dem ersten Format meldet, wenn ein Diensttyp, der der einen LCG entspricht, der erste Diensttyp ist, und die Endgerätevorrichtung den BSR der einen LCG gemäß dem zweiten Format meldet, wenn der Diensttyp, der der einen LCG entspricht, nicht der erste Diensttyp ist.

2. Verfahren nach Anspruch 1, wobei das Bestimmen des Berichtsformats des BSR der einen LCG Folgendes umfasst:
Bestimmen des BSR der einen LCG durch die Endgerätevorrichtung gemäß einer Datenmenge der einen LCG oder einem Diensttyp, der der einen LCG entspricht.

3. Verfahren nach einem der Ansprüche 1 bis 2, wobei sich die Anzahl von BSRs, die mit dem ersten Format enthalten sind, von der Anzahl von BSRs, die mit dem zweiten Format enthalten sind, unterscheidet.

4. Verfahren nach Anspruch 3, wobei das erste Format ein Format zum Melden nur des BSR der einen LCG ist und das zweite Format ein Format zum Melden eines BSR ist, der mindestens den BSR der einen LCG umfasst.

5. Verfahren nach einem der Ansprüche 1 bis 4, wobei das Empfangen der Anzeigeinformationen, die von der Netzwerkvorrichtung gesendet werden, durch die Endgerätevorrichtung Folgendes umfasst:
Empfangen einer Funkressourcensteuerungs(RRC)-Signalisierung, die von der Netzwerkvorrichtung gesendet wird, durch die Endgerätevorrichtung, wobei die RRC-Signalisierung die Anzeigeinformationen umfasst.

6. Endgerätevorrichtung (300), die Folgendes umfasst:
eine Verarbeitungseinheit (310), die dazu ausgelegt ist,
ein Berichtsformat eines Pufferstatusberichts, BSR,
einer logischen Kanalgruppe, LCG, zu bestimmen, wenn die Endgerätevorrichtung (300) nur die eine LCG mit zu übertragenden Daten aufweist, wobei das Berichtsformat ein erstes Format oder ein zweites Format ist und wobei sich das erste Format und das zweite Format unterscheiden;
und
eine Sendeempfangseinheit (320), die dazu ausgelegt ist, den BSR der einen LCG gemäß dem bestimmten Berichtsformat des BSR der einen LCG zu melden;
wobei die Sendeempfangseinheit (320) ferner zu Folgendem ausgelegt ist:
Empfangen von Anzeigeinformationen, die von der Netzwerkvorrichtung gesendet werden, bevor die Verarbeitungseinheit (310) das Berichtsformat des BSR der einen LCG bestimmt, wobei die Anzeigeinformationen anzeigen, dass die Endgerätevorrichtung (300) den BSR der einen LCG gemäß dem ersten Format meldet, wenn die Endgerätevorrichtung (300) nur die eine LCG mit zu übertragenden Daten aufweist, oder die Anzeigeinformationen anzeigen, dass die Endgerätevorrichtung (300) den BSR der einen LCG gemäß dem zweiten Format meldet, wenn die Endgerätevorrichtung (300) nur die eine LCG mit zu übertragenden Daten aufweist;
wobei die Endgerätevorrichtung **dadurch gekennzeichnet ist, dass** die Verarbeitungseinheit (310) zu Folgendem ausgelegt ist:
Bestimmen des Berichtsformats des BSR der einen LGG gemäß den Anzeigeinformationen; wobei die Anzeigeinformationen einen ersten Diensttyp umfassen und der erste Diensttyp anzeigt, dass die Endgerätevorrichtung (300) den BSR der einen LCG gemäß dem ersten Format meldet, wenn ein Diensttyp, der der einen LCG entspricht, der erste Diensttyp ist, und die Endgerätevorrichtung (300) den BSR der einen LCG gemäß dem zweiten Format meldet, wenn der Diensttyp, der der einen LCG entspricht, nicht der erste Diensttyp ist.

7. Endgerätevorrichtung nach Anspruch 6, wobei die Verarbeitungseinheit (310) zu Folgendem ausgelegt ist:
Bestimmen des BSR der einen LCG gemäß einer Datenmenge der einen LCG oder einem Diensttyp, der der einen LCG entspricht.

8. Endgerätevorrichtung nach einem der Ansprüche 6 bis 7, wobei sich die Anzahl von BSRs, die mit dem ersten Format enthalten sein können, von der Anzahl von BSRs, die mit dem zweiten Format enthalten sein können, unterscheidet.

9. Endgerätevorrichtung nach Anspruch 6, wobei das erste Format ein Format zum Melden nur des BSR der einen LCG ist und das zweite Format ein Format zum Melden eines BSR ist, der mindestens den BSR der einen LCG umfasst.

10. Endgerätevorrichtung nach einem der Ansprüche 6 bis 9, wobei die Sendeempfangseinheit (320) zu Folgendem ausgelegt ist:
Empfangen einer Funkressourcensteuerungs(RRC)-Signalisierung, die von der Netzwerkvorrichtung gesendet wird, wobei die RRC-Signalisierung die Anzeigeinformationen umfasst.

11. Netzwerkvorrichtung (500), die Folgendes umfasst:
eine Erzeugungseinheit (510), die dazu ausgelegt ist, Anzeigeinformationen zu erzeugen, wobei die Anzeigeinformationen anzeigen, dass eine Endgerätevorrichtung ein Berichtsformat eines Pufferstatusberichts, BSR, einer logischen Kanalgruppe, LCG, bestimmen soll, wenn die Endgerätevorrichtung nur die eine LCG mit zu übertragenden Daten aufweist, wobei das Berichtsformat ein erstes Format oder ein zweites Format ist, wobei sich das erste Format und das zweite Format unterscheiden; und
eine Sendeempfangseinheit (520), die dazu ausgelegt ist,
die erzeugten Anzeigeinformationen an die Endgerätevorrichtung zu senden, wobei
die Anzeigeinformationen dazu ausgelegt sind anzuzeigen, dass die Endgerätevorrichtung den BSR einer LCG gemäß dem ersten Format meldet, wenn die Endgerätevorrichtung nur die eine LCG mit zu übertragenden Daten aufweist, oder die Anzeigeinformationen dazu ausgelegt sind anzuzeigen, dass die Endgerätevorrichtung den BSR der einen LCG gemäß dem zweiten Format meldet, wenn die Endgerätevorrichtung nur die eine LCG mit zu übertragenden Daten aufweist;
und wobei die Netzwerkvorrichtung **dadurch gekennzeichnet ist, dass** die erzeugten Anzeigeinformationen einen ersten Diensttyp umfassen und der erste Diensttyp dazu ausgelegt ist anzuzeigen, dass die Endgerätevorrichtung den BSR der einen LCG gemäß dem ersten Format meldet, wenn ein Diensttyp, der der einen LCG entspricht, der erste Diensttyp ist, und die Endgerätevorrichtung den BSR der einen LCG gemäß dem zweiten Format meldet, wenn der Diensttyp, der der einen LCG entspricht, nicht der erste Diensttyp ist.

## Revendications

1. Procédé d'émission de données, comprenant :
la détermination, par un dispositif terminal, d'un format de rapport d'un rapport d'état de tampon, BSR, d'un groupe de canaux logiques, LCG, lorsque le dispositif terminal comporte uniquement le seul LCG comportant des données à émettre, dans lequel le format de rapport est un premier format ou un second format, le premier format étant différent du second format ; et
rapporter, par le dispositif terminal, le BSR dudit LCG en fonction du format de rapport déterminé du BSR dudit LCG ;
dans lequel, avant de déterminer le format de rapport du BSR dudit LCG, le procédé comprend en outre :
la réception, par le dispositif terminal, d'informations d'indication envoyées par un dispositif de réseau, les informations d'indication indiquant que le dispositif terminal rapporte le BSR dudit LCG en fonction du premier format lorsque le dispositif terminal comporte uniquement le seul LCG comportant des données à émettre, ou les informations d'indication indiquant que le dispositif terminal rapporte le BSR dudit LCG en fonction du second format lorsque le dispositif terminal comporte uniquement le seul LCG comportant des données à émettre ;
dans lequel le procédé est **caractérisé en ce que** la détermination du format de rapport du BSR dudit LCG comprend :
la détermination, par le dispositif terminal, du format de rapport du BSR dudit LCG en fonction des informations d'indication ; dans lequel
les informations d'indication comprennent un premier type de service, et le premier type de service indique que le dispositif terminal rapporte le BSR dudit LCG en fonction du premier format lorsqu'un type de service correspondant audit LCG est le premier type de service, et le dispositif terminal rapporte le BSR dudit LCG en fonction du second format lorsque le type de service correspondant audit LCG n'est pas le premier type de service.

2. Procédé selon la revendication 1, dans lequel la détermination du format de rapport du BSR dudit LCG comprend :
la détermination, par le dispositif terminal, du BSR dudit LCG en fonction d'une quantité de données dudit LCG ou d'un type de service correspondant audit LCG.

3. Procédé selon l'une quelconque des revendications 1 et 2, dans lequel le nombre de BSR transportés dans le premier format est différent du nombre de BSR transportés dans le second format.

4. Procédé selon la revendication 3, dans lequel le premier format est un format pour rapporter uniquement le BSR dudit LCG, et le second format est un format pour rapporter un BSR comprenant au moins le BSR dudit LCG.

5. Procédé selon l'une quelconque des revendications 1 à 4, dans lequel la réception, par le dispositif terminal, des informations d'indication envoyées par le dispositif de réseau comprend :
la réception, par le dispositif terminal, d'une signalisation de contrôle des ressources radio, RRC, envoyée par le dispositif de réseau, la signalisation RRC comprenant les informations d'indication.

6. Dispositif terminal (300), comprenant :
une unité de traitement (310) configurée pour déterminer un format de rapport d'un rapport d'état de tampon, BSR, d'un groupe de canaux logiques, LCG, lorsque le dispositif terminal (300) comporte uniquement le seul LCG comportant des données à émettre, dans laquelle le format de rapport est un premier format ou un second format, et dans laquelle le premier format et le second format sont différents ; et
une unité d'émission-réception (320) configurée pour rapporter le BSR dudit LCG en fonction du format de rapport déterminé du BSR dudit LCG ;
dans lequel, l'unité d'émission-réception (320) est en outre configurée pour :
recevoir des informations d'indication envoyées par le dispositif de réseau avant que l'unité de traitement (310) détermine le format de rapport du BSR dudit LCG, les informations d'indication indiquant que le dispositif terminal (300) rapporte le BSR dudit LCG en fonction du premier format lorsque le dispositif terminal (300) comporte uniquement le seul LCG comportant des données à émettre, ou les informations d'indication indiquant que le dispositif terminal (300) rapporte le BSR dudit LCG en fonction du second format lorsque le dispositif terminal (300) comporte uniquement le seul LCG comportant des données à émettre ;
dans lequel le dispositif terminal est **caractérisé en ce que** l'unité de traitement (310) est configurée pour :
déterminer le format de rapport du BSR dudit LGG en fonction des informations d'indication ; dans lequel les informations d'indication comprennent un premier type de service, et le premier type de service indique que le dispositif terminal (300) rapporte le BSR dudit LCG en fonction du premier format lorsqu'un type de service correspondant audit LCG est le premier type de service, et le dispositif terminal (300) rapporte le BSR dudit LCG en fonction du second format lorsque le type de service correspondant audit LCG n'est pas le premier type de service.

7. Dispositif terminal en fonction de la revendication 6, dans lequel l'unité de traitement (310) est configurée pour :
déterminer le BSR dudit LCG en fonction d'une quantité de données dudit LCG ou d'un type de service correspondant audit LCG.

8. Dispositif terminal selon l'une quelconque des revendications 6 et 7, dans lequel le nombre de BSR qui peuvent être transportés dans le premier format est différent du nombre de BSR qui peuvent être transportés dans le second format.

9. Dispositif terminal selon la revendication 6, dans lequel le premier format est un format pour rapporter uniquement le BSR dudit LCG, et le second format est un format pour rapporter un BSR comprenant au moins le BSR dudit LCG.

10. Dispositif terminal selon l'une quelconque des revendications 6 à 9, dans lequel l'unité d'émission/réception (320) est configurée pour :
recevoir une signalisation de contrôle des ressources radio (RRC) envoyée par le dispositif de réseau, la signalisation RRC comprenant les informations d'indication.

11. Dispositif de réseau (500) comprenant :
une unité de génération (510) configurée pour générer des informations d'indication, les informations d'indication indiquant qu'un dispositif terminal détermine un format de rapport d'un rapport d'état de tampon, BSR, d'un groupe de canaux logiques, LCG, lorsque le dispositif terminal comporte uniquement le seul LCG comportant des données à émettre, le format de rapport étant un premier format ou un second format, dans laquelle le premier format et le second format sont différents ; et
une unité d'émission-réception (520) configurée pour envoyer les informations d'indication générées au dispositif terminal, dans laquelle les informations d'indication sont configurées pour indiquer que le dispositif terminal rapporte le BSR d'un LCG en fonction du premier format lorsque le dispositif terminal comporte uniquement le seul LCG comportant des données à émettre, ou les informations d'indication sont configurées pour indiquer que le dispositif terminal rapporte le BSR dudit LCG en fonction du second format lorsque le dispositif terminal comporte uniquement le seul LCG comportant des données à émettre ;
et dans lequel le dispositif de réseau est **caractérisé en ce que** les informations d'indication générées comprennent un premier type de service, et le premier type de service est configuré pour indiquer que le dispositif terminal rapporte le BSR dudit LCG en fonction du premier format lorsqu'un type de service correspondant audit LCG est le premier type de service, et le dispositif terminal rapporte le BSR dudit LCG en fonction du second format lorsque le type de service correspondant audit LCG n'est pas le premier type de service.
